# EUROPEAN PATENT SPECIFICATION

(11) **EP 0 581 004 B1**
(45) Date of publication and mention of the grant of the patent: **17.04.1996**
(21) Application number: 93109497.3
(22) Date of filing: 15.06.1993
(51) Int. Cl.: G01M 7/08, G01M 17/00

(54) **Modular pin**
Modulartig aufgebauter Stift
Broche de construction modulaire

(30) Priority: 29.07.1992 IT TO920200
(43) Date of publication of application: 02.02.1994
(73) Proprietor: FIAT AUTO S.p.A., I-10135 Torino (IT)
(72) Inventor: Giraud, Agostino, I-10048 Vinovo (Torino) (IT)
(74) Representative: Di Francesco, Gianni

(56) References cited:
- DE-A- 2 251 481
- PATENT ABSTRACTS OF JAPAN vol. 11, no. 62 (P-551)(2509) 25 February 1987 ; & JP-A-61 228 326
- Bussien, Automobiltechnisches Handbuch, Ergänzungsband zur 18. Auflage, Berlin 1979, pages 1426,1427,1478

## Description

This invention concerns the field of automobile behaviour simulation equipment, and relates in particular to a modular pin for application to movable slides of the type normally used on the aforesaid equipment.

The behaviour of an automobile towards stresses of various types such as acceleration, deceleration, impact, vibration etc., is currently studied by simulation, using special test equipment. A widely employed example of such equipment uses a particular type of movable slide, known as a Hyge slide, on which a metal pin with a cross-section continuously varying along its length is mounted. When in use, the pin is inserted into a duct through which a fluid runs, to hence vary its passage cross-section and enable the consequent variations in the fluid flow rate to be measured.

These pins are in the form of a solid of revolution, the generating line of which for a given pin has a profile such as to produce a determined acceleration curve during the test. The pins are currently produced by lathe-turning from a solid block, and to obtain the desired acceleration curve during the test the appropriate pin, lathe-turned on the basis of calculations to produce the practical result to be achieved during the test, has to be mounted on the slide.

Because of the very large number of possible curves which this equipment can produce, to satisfy the requirements of a particular case the technical personnel have to have available some hundreds of pins, each with a profile which is exclusive to one required acceleration curve. This represents a considerable cost, because in addition to the cost drawback involved in producing a very wide range of pins for each piece of equipment, there is the drawback that if a pin is required having characteristics different from those available, it has to be individually produced by turning, involving inevitable idle time and leading to a slow-down in the entire cycle of operations.

An object of the invention is to provide a device of simple and economical construction able to obviate said drawbacks, by enabling the technical personnel to rapidly mount on and remove from the slide a pin having the profile required for the particular case.

A further object of the invention is to provide a pin the profile of which can assume an infinity of variations, so that any desired acceleration curve can be produced.

These and further objects and advantages, which will be more apparent hereinafter, are attained according to the invention by a modular pin in accordance with claim 1.

The structural ad operational characteristics of a preferred but non-limiting embodiment of the pin according to the invention are described hereinafter with reference to the accompanying drawings, in which:
Figure 1 shows a modular pin according to the invention ready for mounting on the movable slide of equipment for studying automobile behaviour;
Figure 2 shows a component of the modular pin of Figure 1;
Figure 3 shows a series of modular elements which can be mounted on the component of Figure 1 to form a pin according to the present invention; and
Figure 4 shows one of the possible configurations alternative to that of Figure 1 which can be achieved in accordance with the present invention.

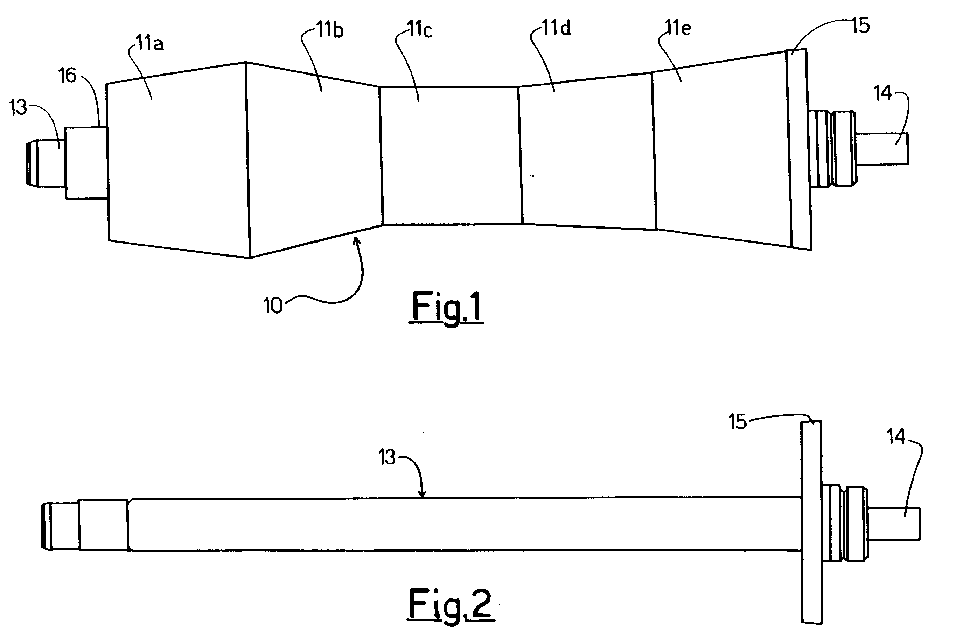

With initial reference to Figure 1, a modular pin according to the invention is shown assembled and is indicated overall by the reference numeral 10. Once assembled, the pin 10 is similar to the traditional pins obtained by turning, and is in the form of a solid of revolution of tapered shape the generating line of which is a broken line composed of the union of the lateral profiles of a series of five modules of frusto-conical or cylindrical shape, indicated by 11a, 11b, 11c, 11d, 11e respectively. The modules are preferably of aluminium construction.

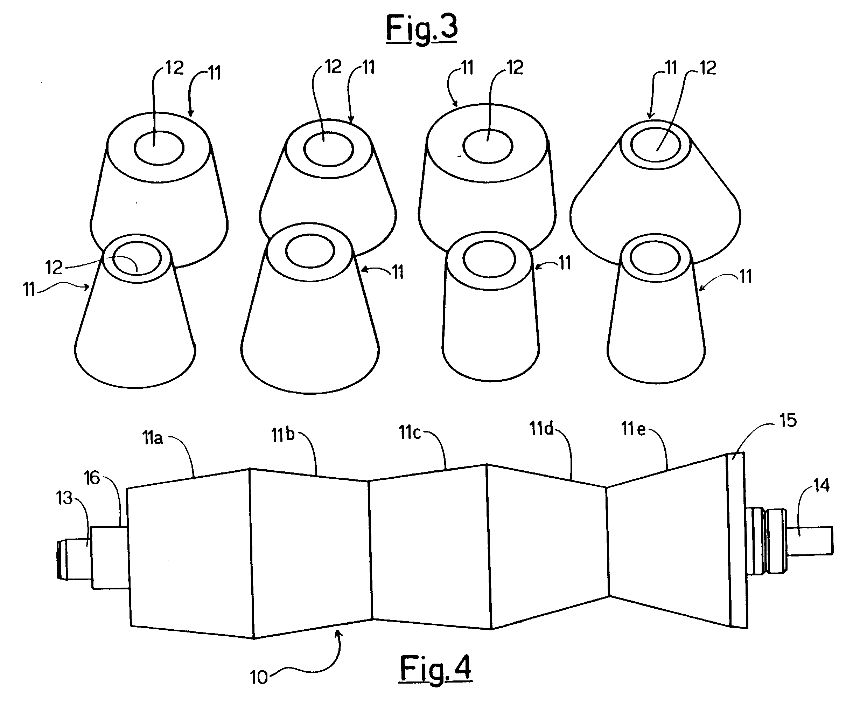

With reference to Figure 3, each module comprises a through circular hole 12 of diameter corresponding to that of a shaft 13, which acts as a longitudinal support element (Figure 2) on which the modules 11 are mounted. The shaft 13 has a threaded end stem 14 to enable the pin 10 to be mounted in a corresponding threaded seat (not shown) on a movable slide. At that end provided with the stem 14, the shaft 13 comprises a circular base plate 15 against which the last module 11e presses (Figure 1). At the opposite end the shaft 13 is threaded to allow a locking nut 16 to be screwed on in order to clamp the modules on the shaft.

As shown in Figures 1 and 4, in all the possible configurations, to achieve a pin with a continuously variable profile the modules 11 are mounted on the shaft 13 side by side in such a manner that the adjacent bases of the various modules have the same diameter. Likewise the diameter of the base of that module 11e which pushes against the plate 15 is equal to the diameter of the plate itself. As will be apparent, with just a few tens of modules available it is possible to form any combination and hence obtain an enormous number of pins of different profile. In addition, small variations can be quickly made during the course of the test, by replacing even a single module and hence more easily conducting tests in a systematic manner.

The embodiments shown in Figures 1 and 4 comprise five modules per pin. However the invention is not limited to the examples described and illustrated, which are to be considered as merely illustrative of the best method of implementing the pin, and which are susceptible to modification in terms of shape, dimensions and arrangement of the parts, the number of modules used and the constructional and operational details.

## Claims

1. A pin for application to movable slides used in equipment for studying automobile behaviour, of the type consisting of a tapered body with a circular cross-section varying continuously along its length and provided at one end with means for fixing/releasing it to and from said slide, characterised by consisting of a plurality of modular elements or modules (11) in the form of solids of revolution, which are positioned side by side and releasably fixed on a longitudinal support element (13) which can itself be releasable fixed to said slide.

2. A pin as claimed in claim 1, characterised in that said longitudinal support element (13) is a shaft of circular cross-section; said modules (11) being traversed by a hole (12) of diameter corresponding to the diameter of the shaft (13) to enable the modules to be mounted on the shaft.

3. A pin as claimed in claim 1, characterised in that said modules (11) are of frusto-conical shape.

4. A pin as claimed in claim 1, characterised in that said modules (11) are of cylindrical shape.

5. A pin as claimed in claim 1, characterised in that the modules are of aluminium construction.

6. A pin as claimed in claims 1 and 2, characterised in that said shaft (13) comprises at its end a plate (15) to act as a stop for one (11e) of said modules (11); the other end of the shaft (13) being threaded to receive, screwed thereon, a ring nut (16) for clamping the modules (11) on the shaft.

## Patentansprüche

1. Stift für Schlitten, die in einer Anlage zur Untersuchung des Verhaltens von Kraftfahrzeugen verwendet werden, bestehend aus einem sich verjüngenden Körper mit einem kreisförmigen Querschnitt, der sich kontinuierlich über seine Länge ändert und am einen Ende mit einer Einrichtung zur Befestigung / Freigabe am bzw. vom Schlitten versehen ist,
**gekennzeichnet durch**
mehrere modulare Elemente bzw. Module (11) in Form von Rotationskörpern, die nebeneinander und lösbar auf einem Längstragelement (13) befestigt sind, das selbst am Schlitten lösbar befestigt ist.

2. Stift nach Anspruch 1,
**dadurch gekennzeichnet, daß**
das Längstragelement (13) eine Achse mit kreisförmigem Querschnitt ist, wobei die Module (11) von einer Bohrung (12) mit einem Durchmesser entsprechend dem Durchmesser der Achse (13) durchsetzt sind, um die Module auf der Achse montieren zu können.

3. Stift nach Anspruch 1
**dadurch gekennzeichnet, daß**
die Module (11) kegelstumpfförmige Form haben.

4. Stift nach Anspruch 1
**dadurch gekennzeichnet, daß**
die Module (11) zylindrische Form haben.

5. Stift nach Anspruch 1,
**dadurch gekennzeichnet, daß**
die Module aus einer Aluminiumkonstruktion bestehen.

6. Stift nach Anspruch 1 und 2,
**dadurch gekennzeichnet, daß**
die Achse (13) an ihrem Ende eine Platte (15) hat, die als Anschlag für einen (11e) der Module (11) wirkt, wobei das andere Ende der Achse (13) ein Gewinde aufweist, um aufgeschraubt eine Ringmutter (16) zum Festklemmen der Module (11) auf der Achse aufzunehmen.

## Revendications

1. Broche destinée à être appliquée à des glissières amovibles utilisées dans des équipements destines à étudier le comportement d'une automobile, du genre consistant en un corps conique ayant une section transversale circulaire qui varie continûment suivant sa longueur et qui est munie à une extrémité de moyens destinés à la fixer à la glissière et à l'en détacher, caractérisée par le fait qu'elle consiste en une pluralité d'éléments modulaires ou modules (11) qui sont sous la forme de solides de révolution, qui sont placés côte-à-côte et fixés- de manière à pouvoir être détachés sur un élément (13) de support longitudinal, qui peut lui-même être fixé de manière amovible à la glissière.

2. Broche suivant la revendication 1, caractérisée en ce que l'élément (13) de support longitudinal est un arbre de section transversale circulaire; un trou (12) étant formé à travers les modules (11), le diamètre du trou correspondant au diamètre de l'arbre (13) pour permettre au module d'être montés sur l'arbre.

3. Broche suivant la revendication 1, caractérisée en ce que les modules (11) ont une forme tronconique.

4. Broche suivant la revendication 1, caractérisée en ce que les modules (11) ont une forme cylindrique.

5. Broche suivant la revendication 1, caractérisée en ce que les modules sont en aluminium.

6. Broche suivant les revendications 1 et 2, caractérisée en ce que l'arbre (13) comprend à son extrémité un plateau (15) , qui agit en tant que butoir d'arrêt pour l'un (11e) des modules (11) ; l'autre extrémité de l'arbre (13) étant filetée pour recevoir, visser sur lui, un écrou (16) en forme d'anneau destiné à fixer par blocage les modules (11) sur l'arbre.
